# EUROPEAN PATENT APPLICATION

(11) **EP 2 293 179 A1**
(43) Date of publication of application: **09.03.2011**
(21) Application number: 08874015.4
(22) Date of filing: 09.10.2008
(51) Int. Cl.: G06F 3/048, G06F 17/30, G09G 5/14, H04N 5/445, H04N 5/76, H04N 7/173

(54) **LIST DISPLAY METHOD AND LIST DISPLAY OF LARGE AMOUNT OF CONTENTS**

(30) Priority: 22.04.2008 JP 2008111709
(71) Applicant: Sharp Kabushiki Kaisha, Osaka-shi, Osaka 545-8522 (JP)
(72) Inventor: ITOH, Atsushi, Osaka 545-8522 (JP); KURIHARA, Ryouichi, Osaka 545-8522 (JP); UEMICHI, Akio, Osaka 545-8522 (JP)
(74) Representative: Müller - Hoffmann & Partner
(86) International application number: PCT/JP2008/068378
(87) International publication number: WO 2009/130810

(57) **Abstract**

To provide AV equipment capable of outputting a large amount of contents, in which the entire image (total number or the like) of the large amount of contents that can be outputted can be intuitively grasped. Further, to provide AV equipment having a means for easily retrieving contents whose output the user requests from the large amount of contents. AV equipment capable of intuitively grasping the entire image of a large amount of contents that can be outputted and for displaying a GUI capable of determining and inputting contents to be outputted in one screen is provided. Further, AV equipment having a means for narrowing down contents to be GUI-displayed by a selecting means (keyword selection or the like) using the attribute information of contents, an image selecting means (cursor selection or the like) using GUI-display, or the like is provided. Furthermore, AV equipment for changing information (title, recording date, or the like) on contents to be displayed on a screen depending on the number of narrowed-down contents is provided.

## Description

### Field of the Invention

The present invention relates to an AV apparatus, which can select one content from a large amount of content and output it. Specifically, the AV apparatus of the present invention displays GUI (Graphical User Interface) enabling a user to easily comprehend the large amount of content, which can be outputted from the AV apparatus, and to search for the content desired by the user.

### Background Art

Recently, memory has been provided with great capacity, so that one AV apparatus can store a large amount of content. Moreover, it is possible to view the content stored in a plurality of viewing source devices (e.g., digital recorder and PC) using one AV apparatus. In such AV apparatus enabling viewing of the large amount of content, GUI with high-level of visibility is generally provided such that a content desired by the user can be searched in a short time upon selection of the content.

For example, in Japanese Unexamined Patent Application Publication No. 2006-140732, in an image reproduction apparatus displaying captured images (content) as thumbnails in a list, the respective thumbnail images displayed in the list is surrounded by a display pane, and color of the display pane varies according to the capturing date of the captured image (content). This makes it possible for the user to search with reference to the displayed image when searching for the desired captured image (content) from the thumbnail images displayed in the list, and to search using information regarding capturing date identifiable by the display pane. As a result, it is possible to efficiently search for the desired content.

However, in Japanese Unexamined Patent Application Publication No. 2006-140732, since the apparatus is based on the premise that the plurality of captured images (content) are displayed as the thumbnail images in the list, the number of the captured images (content) displayable within one display screen is naturally limited. In such case, the user searches for the desired captured image (content) changing the thumbnail images displayed on the screen by turning pages or scrolling. In this case, the operation for turning pages or scrolling is bothersome, and it is difficult to comprehend the entire captured images (content), which have been stored. Specifically, it is difficult to intuitively comprehend how many captured images (content) are stored, how many captured images (content) have been captured in a given year as a part of all captured images (content), or how many thumbnail images have been searched at this time.

Additionally, in Japanese Unexamined Patent Application Publication No. 2006-140732, the apparatus is based on the premise that only the images (content) captured by a digital camera etc. are viewed by the corresponding imaging device. However, in recent years, as described above, it is possible to view the content stored in a plurality of viewing source devices using one electronic apparatus, so that the large amount of content is displayed on the GUI. In such a case, according to the Japanese Unexamined Patent Application Publication No. 2006-140732, a large number of operations for turning pages or scrolling is required, so that this is more bothersome and makes it more difficult to comprehend the entire content.

Patent Reference 1: Japanese Unexamined Patent Application Publication No. 2006-140732

### Disclosure of the Invention Problems that the Invention Tries to Solve

In an AV apparatus of the present invention enabling selection and output of one content from a large amount of content, it is possible to display visual information (GUI) enabling intuitive comprehension of the entire content which can be outputted (e.g., 'number of all content' or 'number of content corresponding to a predetermined attribute information of all content'), and to enter the content to be outputted using the GUI without bothersome operations.

### Means for Solving the Problems

It is an objective of the present invention to provide an AV apparatus displaying the GUI, enabling the intuitive comprehension of the entire selected content and the entry of the content to be outputted, within a screen when receiving selection of all or a part of the content as targets for the GUI operation from the entire content which can be outputted, and an operation method for the apparatus.

Moreover, an AV apparatus having means for receiving the selection of the content to be displayed in the GUI from the user side, a selection means using the attribute information of the content (e.g., selection of keyword) and a selection means for image using the GUI display (e.g., selection of cursor), and an operation method for the apparatus are provided.

Furthermore, an AV apparatus changing information of the content (e.g., a title and a recording date) displayed on the screen according to the number of content selected to be displayed on the GUI, and an operation method for the apparatus are provided.

Specifically, the following aspects of the invention are provided.

In a first aspect of the invention, we provide an AV apparatus, comprising a storage for attribute information, storing a plurality of attribute information of information units such as a file or a folder as a target for operation by a user, a selection unit, selecting the information unit as a target for GUI operation from the information units stored by the storage for attribute information, a calculation unit for allocation amount, calculating allocation amount indicating a size of a display area to be allocated to the respective objects in order to display the objects corresponding to all information units selected by the selection unit within one screen, a storage for style pattern, storing the attribute information of the information unit to be displayed for the object and a style pattern for determining a style of the object, and a display unit, displaying the objects, corresponding to the all information units selected by the selection unit, within one screen based on the style pattern stored in the storage for style pattern according to the allocation amount calculated by the calculation unit for allocation amount.

In a second aspect of the invention, we provide the AV apparatus based on the first aspect of the invention, wherein the storage for style pattern comprises means for storing color tile style pattern, storing a color tile style pattern for identifying the attribute information of a predetermined type of the information unit by an appearance such as a color of the color tile corresponding to a predetermined allocation amount.

In a third aspect of the invention, we provide the AV apparatus based on the first or second aspect of the invention, wherein the storage for style pattern comprises means for storing thumbnail style pattern, storing a thumbnail style pattern, for identifying the attribute information of a predetermined type of the information unit by thumbnail graphic, corresponding to a predetermined allocation amount.

In a fourth aspect of the invention, we provide the AV apparatus based on any one of the first to third aspects of the invention, wherein the storage for style pattern comprises means for storing thumbnail character style pattern, storing a thumbnail character style pattern, for identifying the attribute information of a predetermined type of the information unit by thumbnail graphic and characters, corresponding to a predetermined allocation amount.

In a fifth aspect of the invention, we provide the AV apparatus based on any one of the first to fourth aspects of the invention, wherein the selection unit comprises means for receiving search criterion, receiving input of search criterion for selection, and means for searching with conditions, searching for the information unit corresponding to the search criterion received by the means for receiving search criterion from the information units whose attribute information have been stored in the storage for attribute information.

In a sixth aspect of the invention, we provide the AV apparatus based on any one of the first to fifth aspects of the invention, wherein the selection unit comprises means for acquiring GUI operation information, acquiring GUI operation information for the object for selection, and means for searching for GUI operation, searching for information unit specified by the acquired GUI operation information from the information units whose attribute information have been stored in the storage for attribute information.

In a seventh aspect of the invention, we provide a method for operating an AV apparatus, comprising the steps of acquiring and storing a plurality of attribute information of information units such as a file or a folder as a target for operation by a user; selecting the information unit as a target for GUI operation from the information units, stored by the step of storing, for attribute information; calculating allocation amount indicating a size of a display area to be allocated to the respective objects in order to display the objects corresponding to all information units, selected by the step of selecting, within one screen; and displaying the objects, corresponding to the all information units selected by the step of selecting, within one screen based on the type of attribute information correlated with the information unit to be displayed for the object and the style pattern for determining a style of the object according to the allocation amount calculated by the step of calculating allocation amount.

In an eighth aspect of the invention, we provide the method for operating the AV apparatus based on the seventh aspect of the invention, wherein the step of selecting comprises the sub-steps of receiving input of search criterion for selection, and searching for the information unit corresponding to the search criterion, received by the sub-step of receiving, from the information units whose attribute information have been stored in the storage for attribute information.

In a ninth aspect of the invention, we provide the method for operating the AV apparatus based on the seventh or eighth aspect of the invention, wherein the step of selecting comprises the sub-steps of acquiring GUI operation information for the object for selection, and searching for information unit specified by the acquired GUI operation information from the information units whose attribute information have been acquired and stored by the step of acquiring and storing the attribute information.

### Effects of the Invention

According to the AV apparatus and the operation method for the AV apparatus of the present invention, it is possible for the user to easily comprehend the entirety of a large amount of content, which is stored in the AV apparatus and can be outputted, and to easily search for and view the desired content from them.

Moreover, it is possible for the user to easily comprehend the entirety of a large amount of content, which is stored in the external viewing source devices (e.g., the digital recorder or the PC) connected with the AV apparatus and can be outputted via the AV apparatus, and to easily search for and view the desired content from them.

### DETAILED DESCRIPTION OF THE INVENTION

Embodiments of the present invention will be described hereinbelow with reference to the drawings. The present invention is not to be limited to the above embodiments and able to be embodied in various forms without departing from the scope thereof.

The first embodiment will mainly describe Claims 1, 2, 3, 4, and 7. The second embodiment will mainly describe Claims 5 and 8. The third embodiment will mainly describe Claims 6 and 9.

### «First Embodiment»

### <Concept of First Embodiment>

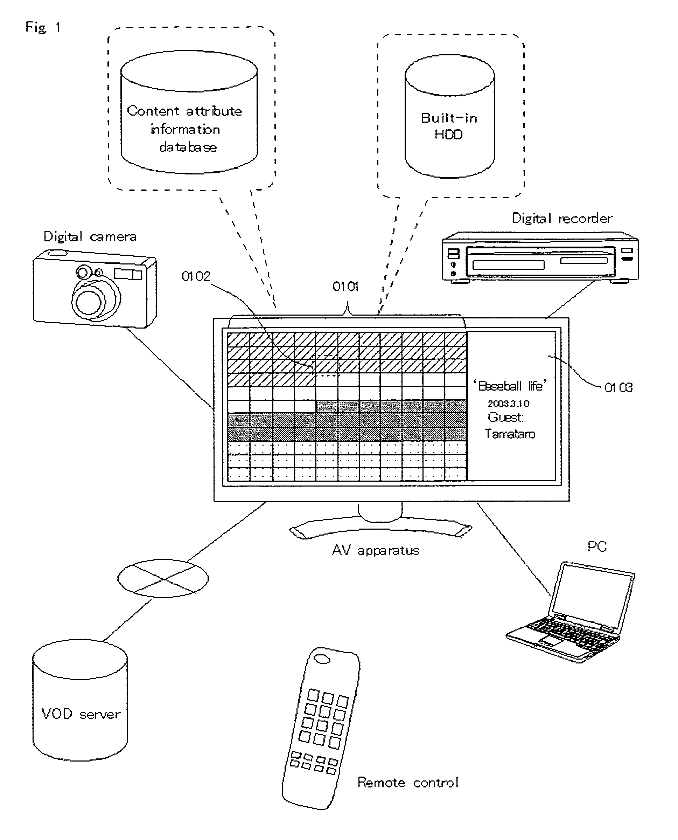

As shown in a conceptual diagram of Fig. 1, the AV apparatus of the first embodiment may be configured to have a built-in HDD capable of storing the content, and to output the content stored in the built-in HDD via the display. Moreover, the AV apparatus may be configured to be connected with a plurality of external viewing source devices (e.g., digital recorder, PC, digital camera, VOD server), and to acquire the content stored in the external viewing source device and to output the content stored in the built-in HDD via the display.

Moreover, the AV apparatus of the first embodiment acquires the attribute information of the content stored in the built-in HDD of the apparatus and the attribute information of the content stored in the external viewing source devices connected with the apparatus at the time, generates the content attribute information database and stores it in the built-in memory when receiving 'input of instruction signal for displaying the GUI for determining the content to be outputted to the display' from the user's remote control. At this time, if no external viewing source device is connected with the apparatus, the AV apparatus acquires only the attribute information of the content stored in the built-in HDD of the AV apparatus, thereby generating the content attribute information database and storing it in the built-in memory.

Moreover, the AV apparatus displays the objects corresponding to all content within a screen using the content attribute information database (0101). Here, when the content of the plurality of external viewing source devices can be outputted, as shown in Fig. 1, by attaching appearance information such as color to the objects, it is possible to carry out grouping with respect to each external viewing source device and displaying. Moreover, when provisionally selecting an object by a cursor (0102), the detail information of the content corresponding to the object may be displayed on the information display field (0103).

Subsequently, when receiving an input of 'determination of output' from the user's remote control in the state that the object is provisionally selected by a cursor (0102), the content corresponding to the object is outputted (reproduced) via the display etc.

### <Functional Configuration of First Embodiment>

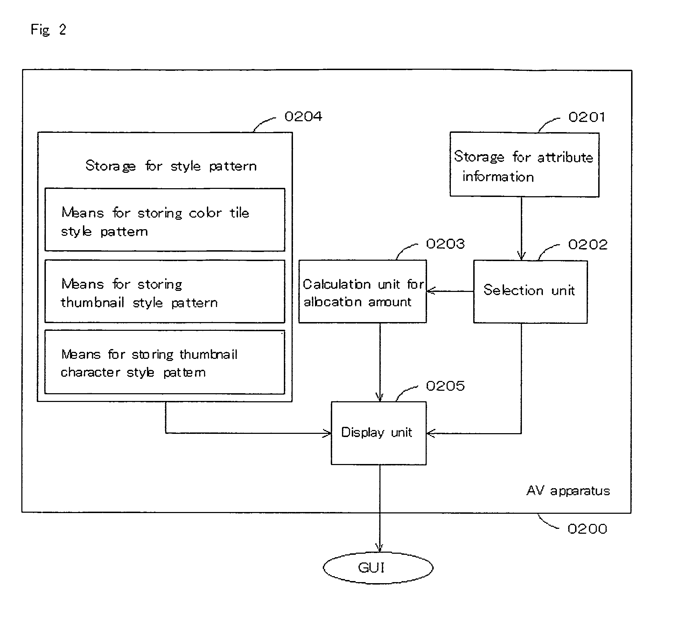

Fig. 2 is a functional block of the AV apparatus of the first embodiment. As shown in Fig. 2, an 'AV apparatus' (0200) of the first embodiment comprises a 'storage for attribute information' (0201), a 'selection unit' (0202), a 'calculation unit for allocation amount' (0203), a 'storage for style pattern' (0204), and a 'display unit' (0205). Moreover, the 'storage for style pattern' (0204) may comprise more than or equal to one of 'means for storing color tile style pattern', 'means for storing thumbnail style pattern', and 'means for storing thumbnail character style pattern'.

The functional block of the apparatus can be implemented by hardware, software, or both hardware and software. Specifically, in the case of using a computer, the respective units are implemented by the hardware configured by a CPU, a main memory, a bus, a secondary storage device (e.g., a hard disk or a nonvolatile memory, a storage media such as CD-ROM or DVD-ROM, or a reading drive for the above media), printing device, display device, other peripheral devices, and I/O ports for the other peripheral devices; and driver program for controlling the above hardware, other application programs, and user interface for inputting information.

Moreover, this hardware and software is used for calculation by the CPU in accordance with the program developed on the RAM, for processing, storing and outputting of the data stored in the memory or the hard disk, or data inputted through the interface, and for controlling the respective hardware components. Moreover, the present invention can be implemented not only as an apparatus but also as a method thereof. Moreover, a portion of such inventions may be configured as software. Furthermore, a software product used for causing a computer to execute the software, and the recording medium, in which the software is installed, should be included in the technical scope of the present invention (the same applies throughout the entire specification).

Hereinafter, functional configuration of the 'storage for attribute information' (0201), a 'selection unit' (0202), the 'calculation unit for allocation amount' (0203), the 'storage for style pattern' (0204), the 'display unit' (0205), and the 'means for storing color tile style pattern', the 'means for storing thumbnail style pattern', and the 'means for storing thumbnail character style pattern' of the 'storage for style pattern' (0204) of the 'AV apparatus' (0200) of the first embodiment will be described.

The 'AV apparatus' (0200) includes any of an electronic apparatus such as a TV or a PC, which can output the content configured by a still image, a moving image and sound information, and can display the GUI for determining a content to be outputted from a plurality of stored content.

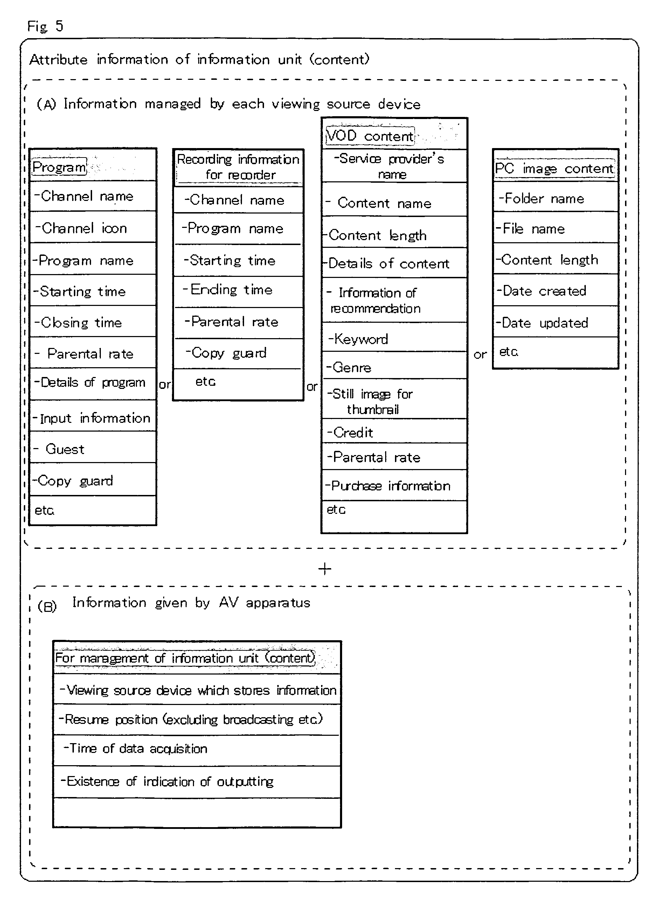

The 'storage for attribute information' (0201) is configured to store a plurality of attribute information of information units such as a file or a folder as a target for operation by a user. The 'information unit' is a file of a folder etc., in which electronic data of the content configured by the still image, the moving image and the sound information etc. When one information unit to be outputted is determined by the user's operation, the AV apparatus carries out signal processing of the determined information unit, and after that, outputs the information unit via the display or a speaker etc. The terms 'attribute information 'of information unit' is data (e.g., 'content name' or 'content length') concerning the information unit (content), and may include data of any content. The content may be different according to type of the viewing source device storing the information unit. Fig. 5(A) shows a pattern of attribute information data of the information unit. Note that this case and Fig. 5(A) are examples, and any one of the attribute information may not be included and other attribute information may be included.

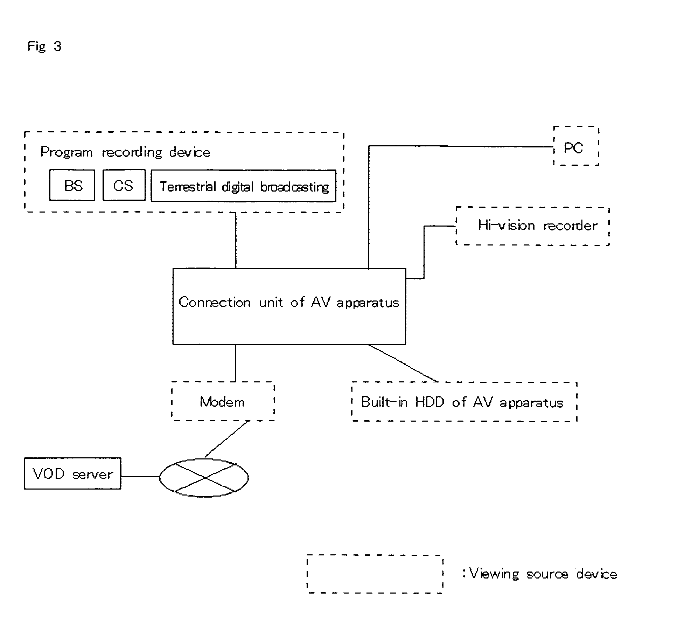

Here, the 'viewing source device' in a device which can acquire the electronic data such as the information unit, and its attribute information, store the data in the built-in memory, and transmit the stored electronic data such as the information unit to the AV apparatus. Examples of the viewing source device include, as shown in Fig. 3, a receiver for program (e.g., programs broadcasted via digital terrestrial broadcasting, BS digital broadcasting, and CS broadcasting), a PC (Personal Computer) having storage medium such as hard disk, various electronic devices such as a high-vision recorder, a reproduction device for storage medium such as DVD, a modem capable of acquiring information from content distribution server such as VOD (Video On Demand), and built-in HDD of the AV apparatus. Each of the above components configures one viewing source device.

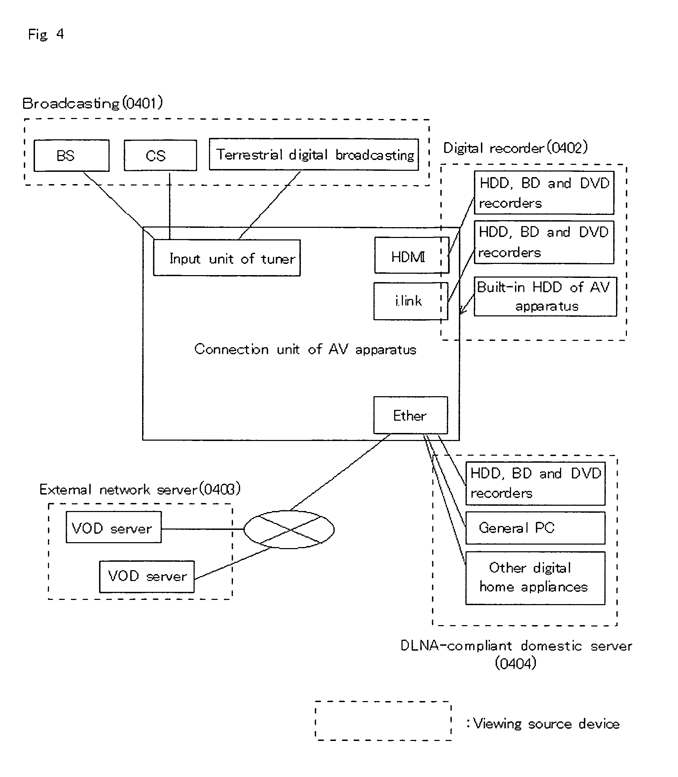

Moreover, as described above (Fig. 3), as to classification of the viewing source devices, one media may be regarded as one viewing source device other than that one device is regarded as one viewing source device. As shown in Fig. 4, examples of the viewing source devices include the viewing source device as the media 'broadcasting' (0401), the viewing source device as the media 'digital recorder' (0402), the viewing source device as the media 'external network server' (0403), and the viewing source device as the media 'DLNA-compliant domestic server' (0404). The attribute information corresponding to each information unit stored and managed by each viewing source device is common in each classification. Examples of the viewing source device for the media 'broadcasting' (0401) include a BS tuner, a CS tuner, a terrestrial digital broadcasting tuner, a AM radio tuner, and a FM radio tuner, and examples of the attribute information to be managed include channel name, channel icon, program name, starting time, ending time, parental rate, details of program (summary of program and outline of program), input information, guest, and copy guard. Additionally, examples of the viewing source device (0402) for the media 'digitally recorded program' include a HDD recorder, a BD (Blu-ray Disc) recorder, a DVD recorder using HDMI connection, a DVD recorder using I. LINK, an externally-connected DVD recorder, and a internally-connected DVD recorder, and examples of the attribute information, correlated with the content, and acquired and managed by the viewing source devices, include channel name, program name, starting time, ending time, parental rate, and copy guard. Additionally, examples of the viewing source device (0403) for the media provided by VoD service from the external network server include a VoD server for outputting the information unit via the internet, and the various electronic devices mediating the information unit outputted therefrom, and examples of the attribute information, correlated with the information unit distributed from the viewing source device, and acquired and managed, include service provider's name, content name, content length, details of content, information of recommendation, keyword, genre, still image for thumbnail, credit, parental code, and purchase information. Moreover, examples of the various viewing source devices (0404) connected by DNLA system include HDD recorder, BD recorder, DVD recorder, a general PC, and other digital home appliances, and examples of the attribute information, correlated with the information unit, and acquired and managed, include folder name, file name, content length, data created, and data updated.

Note that, the concept of the after-mentioned 'viewing source device' may be in accordance with any of the above classifications (Figs. 3 and 4). This premise applies to all embodiments.

The storage for attribute information (0201) acquires the above attribute information (e.g., Fig. 5(A)) from the various viewing source devices and stores the information. Here, the storage for attribute information (0201) gives the management information as shown in Fig. 5(B) to the respective acquired attribute information, and may store information including the management information as the attribute information. (This premise applies to all embodiments.) Examples of the 'management information' include 'ID of the viewing source device storing the information unit (digital recorder, DLNA-compliant domestic server (PC etc.) or VOD server)', 'playback resume position for the information unit (at the head position immediately after the acquisition, and note that this management information is excluded in the case of information unit for broadcasting and still image etc.)' and 'time of data acquisition, and 'existence of indication of outputting'. Note that, this is just an example, and management information other than the above may be given.

Here, as to the timing of acquisition of the attribute information by the storage for attribute information (0201), for example, reception of the 'instruction signal to display the GUI for determining the information unit to be outputted via the display' may trigger the acquisition of the attribute information of the information unit from all viewing source devices being connected at the time. Note that, when there is no viewing source device as the external device being connected, the attribute information may be acquired only from the built-in HDD of the AV apparatus and stored.

The 'selection unit' (0202) is configured to select the information unit as a target for GUI operation from the information units stored by the storage for attribute information. Here, the 'GUI operation' is a predetermined operation for the information unit to be done through the object of the information unit displayed on the GUI screen. Examples of the operation include 'an operation to output (reproduction etc.) of the information unit', 'an operation to search for the information unit to be outputted', and 'an operation to narrow down the objects of the information units to be displayed on the screen to a certain number of objects'. Note that, the above is an example, and other operations for the information units may be included. The selection unit (0202) selects the information unit as a target for the above GUI operation from all information units, whose attribute information are stored by the storage for attribute information. The information unit selected by the selection unit (0202) is displayed on the screen through the object as the target for the GUI operation.

Note that, as to a standard for selecting the information unit by the selection unit (0202), for example, when there is no limitation, all the information units, whose attribute information are stored by the storage for attribute information, may be selected. Moreover, only the information unit, matching a predetermined search criterion (e.g., 'date and time of data acquisition: March 10, 2008'), may be selected. Moreover, only the information unit corresponding to the object selected by the user from the objects of the information units displayed on the screen through a cursor or an icon of a mouse may be selected. These selection means will be described hereinafter, so that a description is omitted.

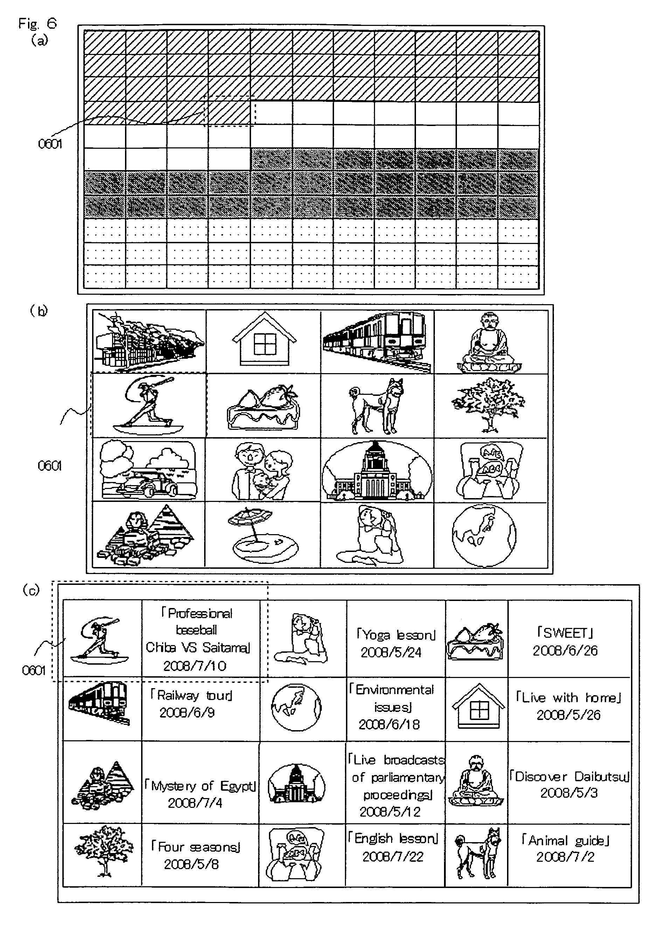

The `calculation unit for allocation amount' (0203) is configure to calculate allocation amount indicating a size of a display area to be allocated to the respective objects in order to display the objects corresponding to all information units selected by the selection unit within one screen. The 'object' is an item arranged on the screen as the target for the GUI operation, and each object is correlated with each information unit. Therefore, when one object is selected, one information unit is selected. Figs. 6(a) to 6(c) show that the object corresponding to the object is displayed on the screen. In Figs. 6(a) to 6(c), the screen is divided into a plurality of sections by vertical and horizontal lines, and each section includes one object. In Fig. 6(a), each object is colored, and the color information indicates predetermined attribute information of the information unit corresponding to each object. In Fig. 6(b), thumbnail images for identifying the details of the information unit are displayed for each object. In Fig. 6(c), the screen is divided into 9 sections by two thick vertical lines and two thick horizontal lines. Additionally, the thumbnail images for identifying the details of the information units and the predetermined attribute information (e.g., 'content name' and 'date of data acquisition') expressed by characters are displayed on the respective objects. Note that, shapes of the objects in Figs. 6(a) to 6(c) are not limited, and may be square or rectangular. However, it is preferable that all sections are uniform in size.

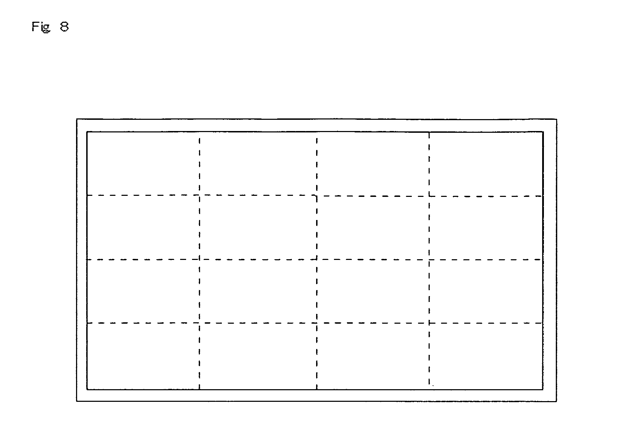

The 'calculation unit for allocation amount' (0203) is configured to calculate the allocation amount of each object to be displayed on the screen, in which the allocation amount means size of each object (each section) as shown in Figs. 6(a) to 6(c). The calculation is carried out by the following methods. At the outset, in a rule to divide the screen into the plurality of sections, as shown in Fig. 8, the division is always carried out by the same number of vertical lines and horizontal lines on the screen (In Fig. 8, three vertical lines and three horizontal lines), thereby dividing into N x N sections (N is integral number more than or equal to one) (i.e., in Fig. 8, 4 × 4 = 16 sections), Subsequently, the calculation unit for allocation amount (0203) acquires the number information of the selected information unit: M sections (M is integral number more than or equal to one) from the selection unit (0202), and calculates the minimum N satisfying '(N² ≥ M)'. Subsequently, after calculating N, by using the preliminarily stored data indicating the size of the screen (e.g., 1,600 'pixels' × 1,200 'pixels'), the calculation unit calculates the allocation amount (e.g., 1,600/N 'pixels' × 1,200/N 'pixels'). Note that, this calculation method is an example, and the screen may be divided into K × L 'sections' (K ≠ L, K and L are integral numbers more than or equal to one), or the allocation amount may be calculated by other method.

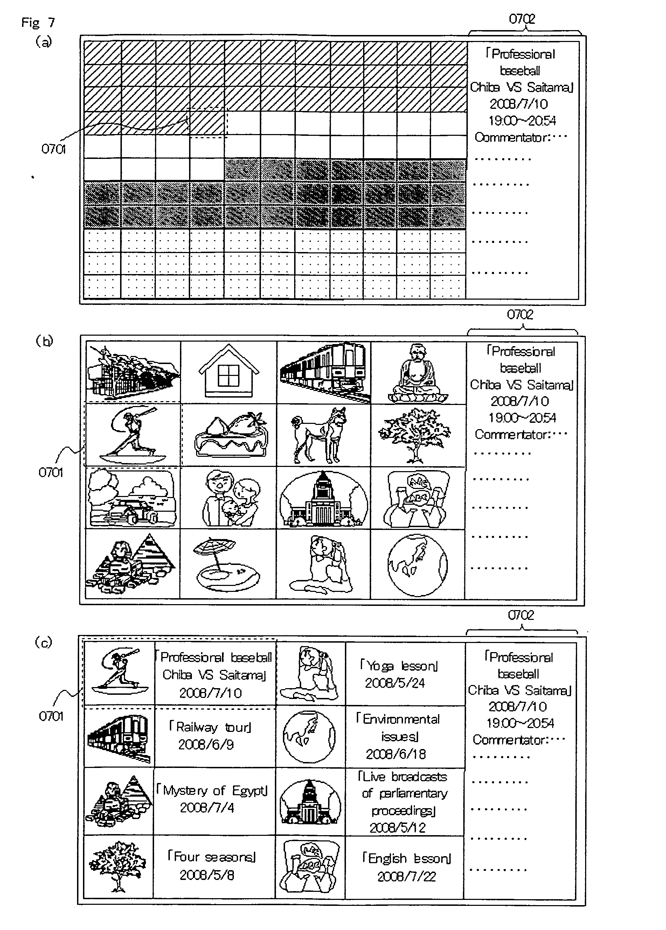

Here, as shown in Figs. 7(a) to 7(c), the AV apparatus of the first embodiment may display information field (0702) for displaying the detailed information of the information unit (detailed information of the content), corresponding to the object provisionally selected by the cursor (0701), on a part of the screen (0702). The display of the detailed information on the information display field (0702) is carried out by using the attribute information of each information unit. In such case, the calculation unit for allocation amount (0703) identifies the information indicating the size of the information display field (0702), and calculates the allocation amount, such that all the objects are displayed on the screen excluding the portion (0703). Moreover, the user may determine whether or not the information display field (0702) is displayed, and may control using the remote control etc. Moreover, the user may determine the size of the information display field (0703) on the screen, and may control using a remote control. The calculation unit for allocation amount (0703) calculates the size of the area for displaying the object on the screen, and calculates the allocation amount according to the size.

The 'storage for style pattern' (0204) is configured to store the attribute information of the information unit to be displayed for the object and a style pattern for determining a style of the object. The terms 'according to the allocation amount' means the same as 'according to size of the area for displaying one object on the screen'. Therefore, the storage for style pattern (0204) stores a plurality of style patterns of GUI according to the allocation amount so as to display appropriate amount of information by appropriate style according to the size of the object displayed on the screen, thereby enabling the user's easy and efficient GUI operation.

The style pattern of the object is specified by the 'style' showing an appearance of the object such as a shape, and by 'attribute information to be displayed through the object'. Specifically, as shown in Fig. 6(a), a style that the screen is simply divided into a plurality of sections (hereinafter, referred to as 'tile-shaped') may be used. Moreover, the by 'attribute information to be displayed through the object' are unnecessary. Therefore, in Fig. 6(a), although the color information is given to each section, this information is also unnecessary to be given. Even when configuring like this, as shown in Fig. 7(a), by displaying the information display field (0702) on the screen, the information unit corresponding to each object and the details thereof can be recognized. Note that, as the 'allocation amount' for displaying the tile-shaped object, for example, the allocation amount for displaying more than several hundreds of objects on the screen may be used. When displaying such number of objects on the screen, in the case of a television with general sized screen (1,600 'pixels' × 1,200 'pixels'), one object displayed on the screen is too small for the user to view even if the thumbnail or the character information is given to each object, thereby making the GUI not user-friendly. Therefore, by displaying the tile-shaped object without attribute information, it is possible to display the GUI with high-visibility. Specifically, when dividing the screen into sections as described in Fig. 8 for the AV apparatus having 1,600 'pixels' × 1,200 'pixels' screen, if the screen is divided into more than or equal to (16 × 16) sections (each object is less than or equal to 75 'pixels' × 75 'pixels'), the tile-shaped object may be displayed. The above 'allocation amount' for determining the display style of the object may be arbitrarily determined according to the screen of the AV apparatus or division manner for sections upon displaying in the tile shape.

Here, the 'storage for style pattern' (0204) may comprise 'means for storing color tile style pattern', 'means for storing thumbnail style pattern', 'means for storing thumbnail character style pattern'.

The 'means for storing color tile style pattern' is configured to store a color tile style pattern for identifying the attribute information of a predetermined type of the information unit by an appearance such as a color of the color tile corresponding to a predetermined allocation amount. Therefore, the style of the color tile style pattern is 'tile-shaped' as shown in Figs. 6(a) and 7(a). By giving visual information such as a color to the tile-shaped object, the attribute information of a predetermined type of the information unit corresponding to each object is identified by the appearance. The 'attribute information of a predetermined type' is an arbitrary item for design, and for example, may be 'date of data acquisition' or 'viewing source device'. Specifically, in order to display the 'date of data acquisition' of the information unit corresponding to each object in identifiable manner, by using the 'date of data acquisition' included in the attribute information of each information unit, it is possible to display each object in different color according to the date (or 'month' or 'year') of data acquisition. This makes it possible for the user to comprehend when the information unit corresponding to each object has been acquired, or how many information units exist and when the information units have been acquired. Moreover, in order to display which 'viewing source device' stores the information unit corresponding to each object in the identifiable manner, by using the 'viewing source device ID' included in the attribute information of each information unit, it is possible to display each object in a different color according to the viewing source device storing each information unit. This makes it possible for the user to easily comprehend which viewing source device stores the information unit, to which each object corresponds, and how many information units stored in a certain viewing source device exist.

Moreover, the user can select a type of attribute information to be displayed in an identifiable manner by the above color information etc. Moreover, as to the means for giving information to identify the attribute information to each object, in addition to the visual information by the color, blinking the object or gradation display, or combination of them may be used. Note that, as to the 'allocation amount' for displaying the object in the color tile style pattern, for example, in the case of a television with general sized screen (1,600 'pixels' × 1,200 'pixels'), the allocation amount for displaying more than several hundreds of objects on the screen may be used. This is an arbitrary item for design similar to the above.

The 'means for storing thumbnail style pattern' is configured to store a thumbnail style pattern, for identifying the attribute information of a predetermined type of the information unit by thumbnail graphic, corresponding to a predetermined allocation amount. The 'thumbnail graphic' is a still image for identifying the details of the information unit for the user. Therefore, as shown in Figs. 6(b) and 7(b), the style of the thumbnail style pattern has the slightly large 'tile-shape', such that the still image is viewable in the display. Subsequently, the thumbnail image is displayed on each object, and the details of the information unit, to which each object corresponds, is displayed. Note that, as to the 'allocation amount' for displaying the object in the thumbnail style pattern, for example, in the case of a television with general sized screen (1,600 'pixels' × 1,200 'pixels'), the allocation amount for displaying several dozens to several hundreds of objects on the screen may be used. This is an arbitrary item for design similar to the above.

The 'means for storing thumbnail character style pattern' is configured to store a thumbnail character style pattern, for identifying the attribute information of a predetermined type of the information unit by thumbnail graphic and characters, corresponding to a predetermined allocation amount. Therefore, as shown in Figs. 6(c) and 7(c), the style of the thumbnail character style pattern has the rather large 'tile-shape', such that the still image and characters are viewable in the display. Subsequently, the thumbnail image and characters are displayed on each object, and the details of the information unit, to which each object corresponds, is displayed. The details of the characters displayed for the object is not limited if the characters indicate information included in the attribute information of the information unit. Note that, as to the 'allocation amount' for displaying the object in the thumbnail character style pattern, for example, in the case of a television with general sized screen (1,600 'pixels' × 1,200 'pixels'), the allocation amount for displaying less than several dozens of objects on the screen may be used. This is an arbitrary item for design similar to the above.

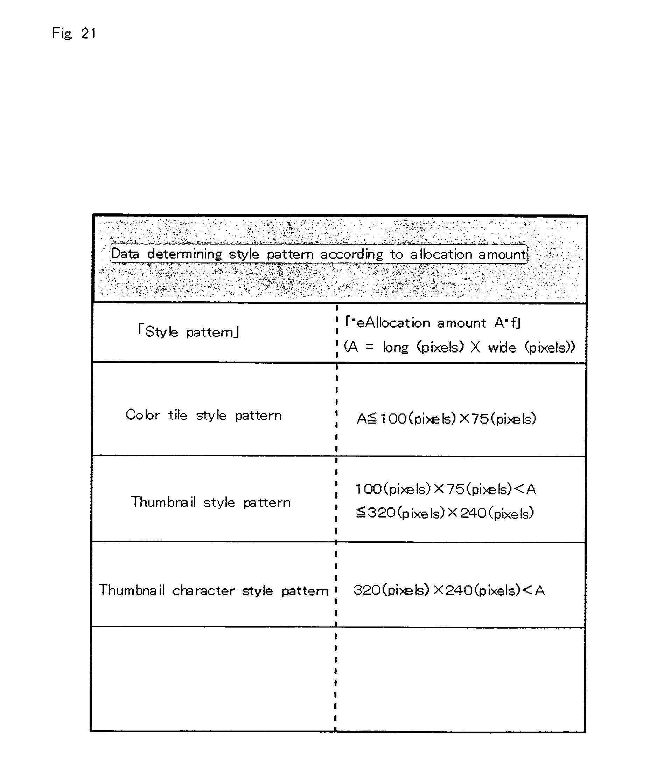

Here, Fig. 21 shows an example of pattern of the 'data for determining the style pattern according to the allocation amount' stored by the 'storage for style pattern' (0204), when the 'storage for style pattern' (0204) comprises the means for storing color tile style pattern, the means for storing thumbnail style pattern, and the means for storing thumbnail character style pattern. As shown in Fig. 21, it may be determined that when the allocation amount (vertical 'pixels' × horizontal 'pixels') is less than or equal to 100 'pixels' × 75 'pixels', the color tile style pattern is used for display, when the allocation amount is more than 100 'Pixels' × 75 'pixels' and less than or equal to 320 'pixels' × 240'pixels', the thumbnail style pattern is used for display, and when the allocation amount is more than 320 'pixels' × 240 'pixels', the thumbnail character style pattern is used for display. Note that this is an arbitrary item for design.

The 'display unit' (0205) is configured to display the objects, corresponding to the all information units selected by the selection unit, within one screen in accordance with the style pattern, stored in the storage for style pattern, based on the allocation amount calculated by the calculation unit for allocation amount. Therefore, the display unit (0205) acquires the allocation amount calculated by the calculation unit for allocation amount (0203) according to the section by the selection unit (0202) when the user inputs an 'instruction signal to display GUI for determining the information unit to be outputted' through the remote control. Subsequently, the style pattern according to the acquired allocation amount is acquired from the storage for style pattern (0204), and according to the acquired style pattern, by using the attribute information of the information unit selected by selection unit (0202), the GUI is displayed. As to the concrete method for establishing correspondence between the object displayed by the GUI and the information unit selected by selection unit (0202), for example, when the screen is divided into a plurality of sections according to the number of the information units selected by the selection unit (0202), serial number is assigned to each section. Additionally, similarly, serial numbers are assigned to all information units selected by the selection unit (0202). Subsequently, by the assigned serial numbers, the correspondence between the object displayed by the GUI and the information unit selected by selection unit (0202) may be established.

Here, for reference, Figs. 6 and 7 show an example of the GUI displayed by the display unit (0205). In the GUI of Figs. 6 and 7, the objects corresponding to all information units selected by the selection unit (0202) are displayed. Therefore, the user need not turn pages or scroll to search for the information unit of the search target, and can easily comprehend total number of the information unit to be outputted at the time. Moreover, the display unit (0205) may display the information display field (0702) as shown in Fig. 7. In the information display field (0702), the detailed information of the information unit corresponding to the object provisionally selected by the cursor (0701) is displayed. This enables the user to easily comprehend correspondence between each object and information unit.

Moreover, in the GUI of Figs. 6 and 7, the user can operate the cursor (0601, 0701) displayed on the screen through the cross-shaped key of the remote control, thereby selecting one desired object (moving the cursor on the object), and inputting the determination of output. In this case, the information unit corresponding to the determined object may be outputted through the display.

Here, when the communication between the viewing source device storing the information unit corresponding to the object displayed by the display unit (0205) and the AV apparatus is disconnected upon displaying the object, therefore, when the object being displayed as the information unit (content), which can be outputted through the GUI, cannot be actually outputted, if the user inputs the determination of output as to the object corresponding to such information unit, the message as 'Determined content cannot be outputted due to disconnection of communication with viewing source device' may be outputted in place of such information unit.

### <Hardware Configuration of First Embodiment>

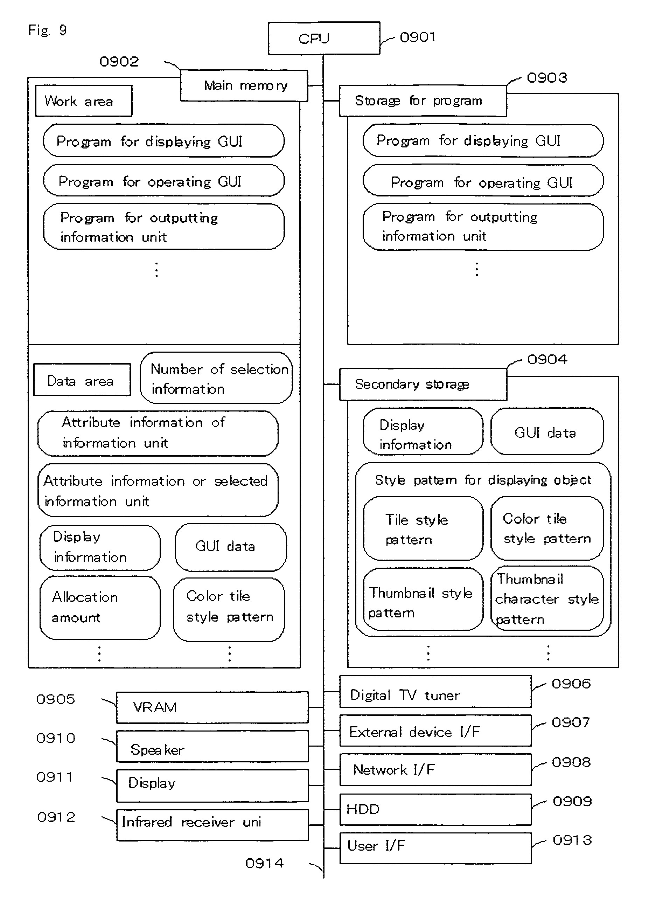

Fig. 9 is a diagram showing an example of a hardware configuration of the 'AV apparatus' of the first embodiment. As shown in Fig. 9, the 'AV apparatus' of the first embodiment comprises 'CPU' (0901), 'main memory' (0902), 'storage for program' (0903), 'secondary memory' (0904), 'VRAM' (0905), 'digital TV tuner' (0906), 'external device I/F (Interface)' (0907), 'network I/F' (0908), 'HDD' (0909), 'speaker' (0910), 'display' (0911), 'infrared receiver unit' (0912), and 'user I/F' (0913), and these components configure the 'storage for attribute information', 'selection unit', the 'calculation unit for allocation amount', the 'storage for style pattern' and the 'display unit'. These components are mutually connected via a data communication path such as 'system bus' (0914), thereby executing transmission/reception and processing of information.

Hereinafter, with reference to a diagram of Fig. 9 showing an example of a hardware configuration, functions of the AV apparatus of the first embodiment will be described.

When the CPU (0901) receives the instruction signal for GUI display via the infrared receiver unit (0912) or the user I/F (0913) in accordance with the program for GUI display developed on the work area of the main memory (0902), the CPU acquires the attribute information of the information unit, which can be outputted via the AV apparatus, from the digital TV tuner (0906), the external device I/F (Interface) (0907), the network I/F (0908), and the HDD (0909) in accordance with the instruction to acquire attribute information, and stores the information in the data area of the main memory (0902). Subsequently, when the information unit, whose object is to be displayed on the display (0911), is selected from the information units, whose attribute information have been acquired, the information units are stored as the attribute information of selected information unit in the data area of the main memory (0902). Subsequently, the number of selected information units is acquired by calculation, and stored in the data area of the main memory (0902) as the number of selected information units. Subsequently, display information regarding size of the display is extracted from the secondary memory (0904), and stored in the data area of the main memory (0902). Subsequently, by using the calculated and stored number of selected information units and the display information, the allocation amount indicating size for displaying one object on the display screen, such that objects corresponding to all selected information units are displayed within one display screen.

Subsequently, one style pattern according to the calculated allocation amount is extracted from the style patterns for displaying object stored in the secondary memory (0904), and stored in the data area of the main memory (0902). Subsequently, in accordance with the style pattern of the extracted object, the GUI data is developed on the VRAM (0905), and is outputted to the display (0911).

Subsequently, in accordance with the program for operating GUI developed on the work area of the main memory (0902), when receiving the input of the determination of output for one object via the infrared receiver unit (0912) or the user I/F (0913), the cursor position on the display screen is calculated, and the information unit corresponding to the object specified by the calculated positional information is specified. Subsequently, by using the attribute information of the specified information unit, the viewing source device storing the information unit is specified. Subsequently, in accordance with the program for outputting information unit developed on the work area of the main memory (0902), the information unit, for which the input of the determination of output has been received, is acquired from the specified viewing source device (e.g., the digital TV tuner (0906), the external device I/F (Interface) (0907), the network I/F (0908), and the HDD (0909)). Subsequently, the acquired information unit is decoded, and outputted through the display (0911) or the speaker (0910).

### <Processing Flow of First Embodiment>

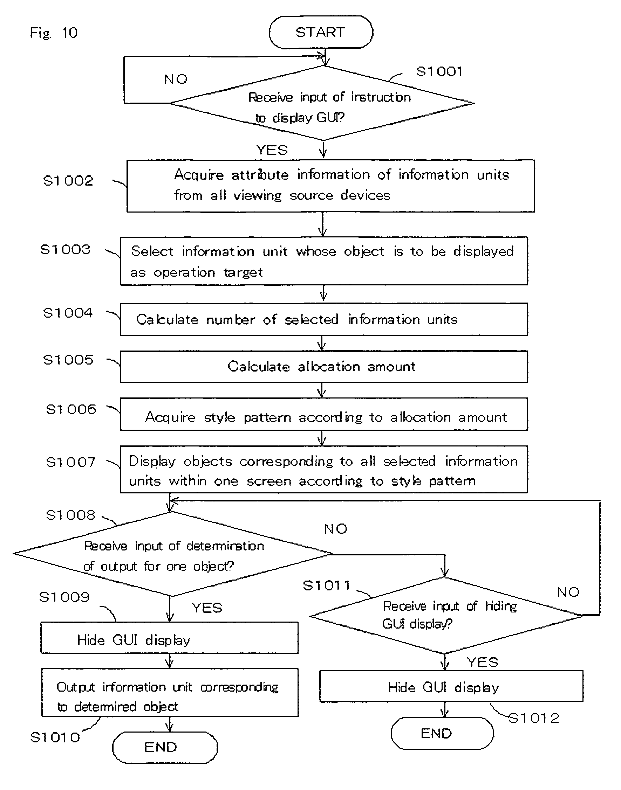

With reference to a flowchart of Fig. 10, processes of the AV apparatus of the first embodiment will be described.

At the outset, when receiving the input of instruction to display the GUI for determining the information unit to be outputted from the user (S1001), the attribute information of information unit, which can be outputted using the AV apparatus, is acquired from all viewing source devices being connected at the time (S1002). Subsequently, the information unit as an operation target, whose object is displayed by the GUI, is selected from the information units, whose attribute information have been acquired (S1003). Subsequently, the number of the selected information units is calculated (S1004), and the allocation amount is calculated by using the information of display size (S1005).

Subsequently, the style pattern according to the calculated allocation amount is extracted from a plurality of style patterns for determining display manner for the object (S1006), and according to the extracted style pattern, the objects corresponding to all selected information units are displayed within one screen (S1007).

Subsequently, when receiving the input of the determination of output for one object from the GUI using the cursor etc. (S1008), the GUI of the display is hidden (S1009), and the information unit corresponding to the object, for which the determination of output has been inputted, is acquired from the viewing source device, and outputted to the display (S1010).

Meanwhile, if the input of the determination of output for the one object has not been received, the input of the determination of output for the one object is waited at S1008 until the input to hide the GUI is received (S1011). When receiving the input to hide the GUI, the GUI of the display is hidden (S1012), and process is terminated.

### <Brief Description of Effects of First Embodiment>

According to the AV apparatus of the first embodiment, the object for operation such as output for the information unit selected from the information units (content), which can be outputted, is displayed in a list within one screen. As a result, the user can do operation for searching and determining the information unit to be outputted, and outputting the information unit without cumbersome operations such as turning pages or scrolling.

Moreover, the AV apparatus of the first embodiment can display the attribute information of a predetermined type of the information unit by giving the color information to the object according to size of the object on the screen to be displayed in the list. Moreover, according to size of the object on the screen to be displayed in the list, the thumbnail graphic for indicating the details of the information unit for the object can be displayed. Moreover, according to size of the object on the screen to be displayed in the list, the thumbnail graphic for indicating the details of the information unit for the object and the characters for indicating the attribute information of the predetermined type can be displayed. Therefore, the GUI with high-visibility is implemented, and the user can efficiently find the object corresponding to the desired information unit from many objects displayed in the list.

### «Second Embodiment»

### <Concept of Second Embodiment>

In an AV apparatus of a second embodiment based on the first embodiment, it is possible to select only the content corresponding to a predetermined search criterion from a plurality of content, which can be outputted using the AV apparatus, and to display only the object corresponding to the selected content in a list in one screen.

### <Functional Configuration of Second Embodiment>

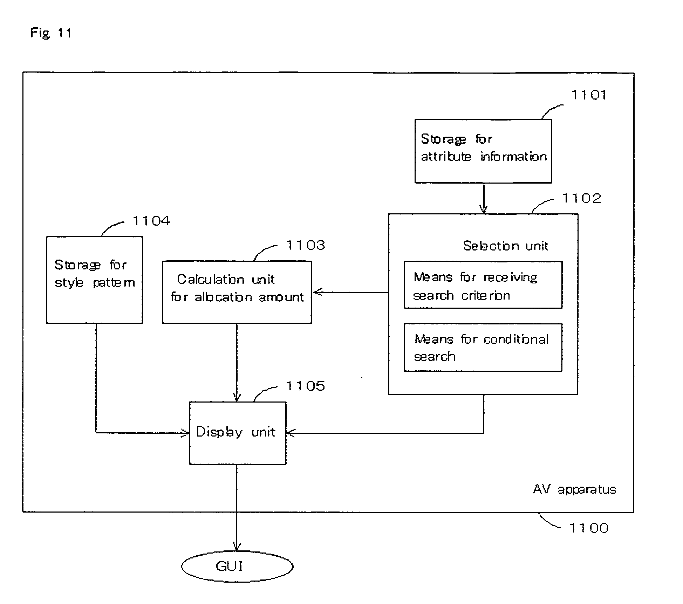

Fig. 11 is a functional block of the AV apparatus of the second embodiment. As shown in Fig. 11, an 'AV apparatus' (1100) of the second embodiment comprises a 'storage for attribute information' (1101), a 'selection unit' (1102), a 'calculation unit for allocation amount' (1103), a 'storage for style pattern' (1104), and a 'display unit' (1105). The 'selection unit' (1102) comprises 'means for receiving search criterion' and 'means for conditional search'.

Note that, functional configurations of the 'storage for attribute information' (1101), the 'calculation unit for allocation amount' (1103), the 'storage for style pattern' (1104), and the 'display unit' (1105) are the same as those described in the first embodiment, so that descriptions are be omitted. Hereinafter, descriptions of functional configurations of the 'means for receiving search criterion' and the 'means for conditional search' of the 'selection unit' (1102) will be provided.

The 'means for receiving search criterion' of the 'selection unit' (1102) is configured to receive input of search criterion for selection. The 'selection' corresponds to the 'selection' by the selection unit of the first embodiment. Therefore, the selection is to select the information unit, whose object is to be displayed for the GUI operation, from all information units, whose attribute information have been stored in the storage for attribute information (1101).

Here, as described in the first embodiment, the display unit (1105) displays the objects, corresponding to the all information units selected by the selection unit (1102), in a list within one screen in accordance with the predetermined style pattern. The smaller the number of objects to be displayed in a list, the larger the display area (allocation amount) for one object, and the more information regarding the information unit to be displayed for each object. As a result, the user can efficiently search for the object corresponding to the desired information unit.

Therefore, the 'means for receiving search criterion' receives search criterion in order to reduce the number of the information units selected by the selection unit (1102) and the number of the objects displayed in the list by the display unit (1105), such that the user can efficiently find the object corresponding to the desired information unit. When the means for receiving search criterion receives the search criterion, the after-mentioned 'means for conditional search' searches for only the information unit corresponding to the received search criterion. Subsequently, the selection unit (1102) selects only the information unit searched by the means for conditional search as a target for GUI operation.

As to the search criterion received by the means for receiving search criterion, for example, a 'search criterion for limiting by type of the viewing source device storing the information unit', a 'search criterion for limiting by date of storing the information unit', a 'search criterion for limiting by name of the information unit', or a 'search criterion for limiting by type of genre of the information unit' may be used. These are just examples, and other various search criteria using the attribute information of the information unit may be used. As to means for receiving the search criterion by the means for receiving search criterion, for example, input of selection of search keyword (e.g., 'digital recorder (viewing source device)' or 'March 2008' (date of storing data)) displayed in a toggle-type manner using the remote control may be received. Moreover, the search keyword directly inputted may be received.

Moreover, as a timing of the receiving the input of the search criterion, in a state that the GUI is being displayed as shown in Figs. 6 and 7, the search criterion may be received in order to reduce the number of the objects to be displayed. Moreover, in a state that the GUI is not displayed, when newly displaying the GUI, the search criterion may be received in order to reduce the number of the objects to be initially displayed.

The 'means for conditional search' of the 'selection unit' (1102) is configured to search for the information unit corresponding to the search criterion received by the means for receiving search criterion from the information units whose attribute information have been stored in the storage for attribute information. The search by the means for conditional search The search by the means for conditional search is carried out by using the attribute information stored by the storage for attribute information Therefore, when the means for conditional search acquires the search criterion (search keyword) received by the means for receiving search criterion, the acquired search criterion (search keyword) and the attribute information stored in the storage for attribute information (1101) are compared, thereby extracting the attribute information corresponding to the search criterion (matching the search keyword). Thus, the information unit matching the search criterion can be searched.

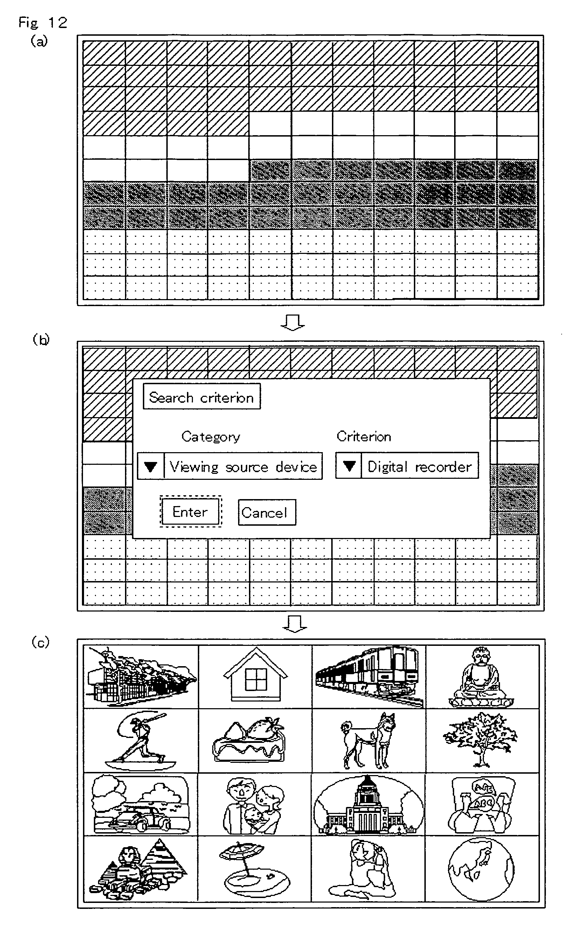

Note that, in a state that the GUI of any of the style pattern is displayed as shown in Fig. 12(a), when the means for receiving search criterion receives 'input of the search criterion' and the 'input of determination' as shown in Fig. 12(b), this triggers that the display unit (1105) displays by GUI only the object corresponding to the information unit matching the search criterion as shown in Fig. 12(c).

Therefore, when the means for receiving search criterion receives 'input of the search criterion' and the 'input of determination', this triggers that the means for receiving search criterion searches for the information unit matching the search criterion, and the selection unit (1102) newly selects only the searched information unit. Subsequently, the 'calculation unit for allocation amount' (1103) calculates the allocation unit according to the number of the newly selected information units, and as shown in Fig. 12(c), the display unit (1105) may display by GUI only the object corresponding to the information unit newly selected in accordance with the style pattern according to the newly calculated allocation amount.

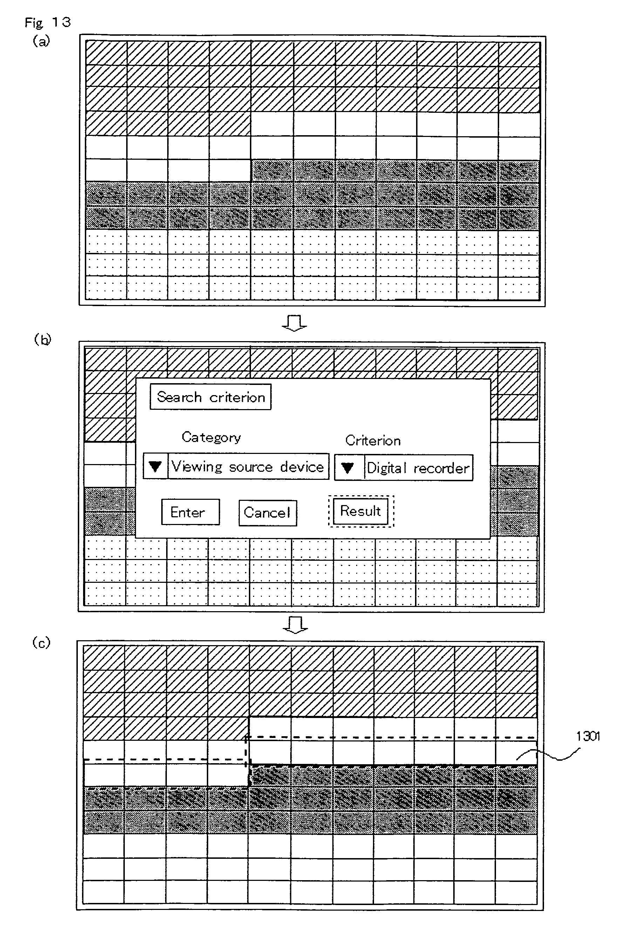

Moreover, in a state that the GUI is being displayed as shown in Fig. 13(a), when the means for receiving search criterion receives 'input of the search criterion' and the 'input of determination' as shown in Fig. 13(b), this triggers that the display unit displays only the object corresponding to the information unit matching the search criterion in an identifiable manner by using visual information (1301) such as surrounding the object with perforated lines or blinking the object as shown in Fig. 13(c).

Subsequently, when the user does the 'input of the search criterion' and the 'input of determination' (the means for receiving search criterion receives 'input of the search criterion' and the 'input of determination'), this triggers that only the object corresponding to the information unit matching the search criterion may be displayed by the GUI.

Note that, in Fig. 13(c), the objects matching the search criterion are collected at a predetermined place, however, when the objects matching the search criterion appear at separate locations, the objects may be sorted and displayed by using sort function. Moreover, after the predetermined number of the information units corresponding to the search criterion are selected, and only the selected information units are displayed in the list, the data for identifying the information units selected and displayed in the list may be stored. This makes it possible for the user to return the GUI indication on the display to the GUI indication in the former state. Specifically, after changing the GUI indication of Fig. 12(a) to the GUI indication of Fig. 12(c), it is possible to return to the GUI indication of Fig. 12(a) by a simple operation as 'display return' etc. As to the former selection data, one data or a plurality of datum may be stored. This premise applies to all of the following embodiments.

In the above, with reference to Figs. 12 and 13, processing for receiving the search criterion in the state the GUI is displayed by the color tile style pattern has been described, and it is also possible to receive the search criterion in the state the GUI is displayed by any of the other style patterns.

### <Hardware Configuration of Second Embodiment>

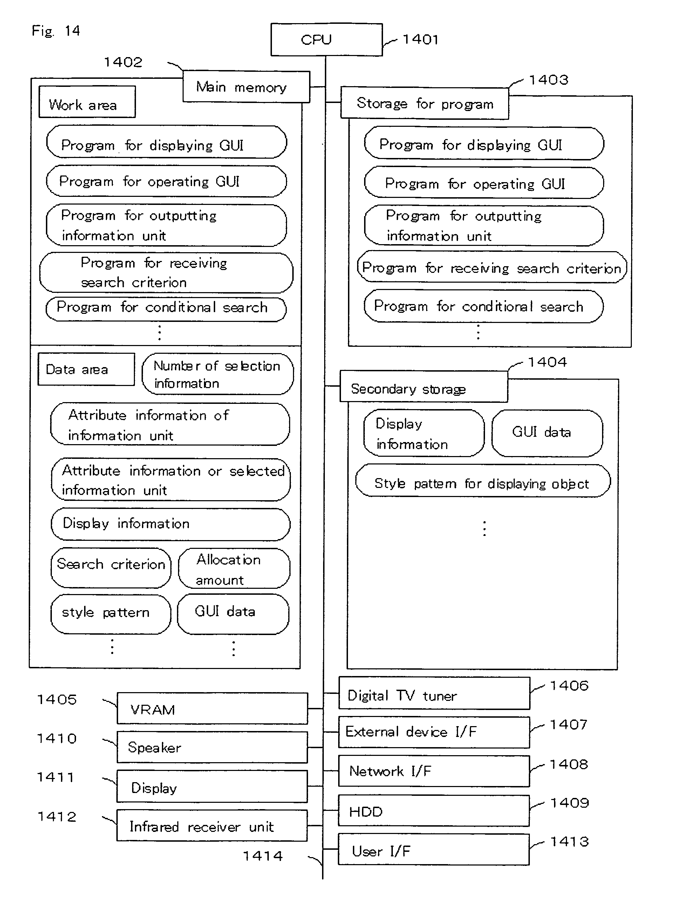

Fig. 14 is a conceptual diagram showing an example of hardware configuration of the AV apparatus of the second embodiment.

Hereinafter, with reference to a diagram of Fig. 14 showing an example of a hardware configuration, functions of the AV apparatus of the second embodiment will be described.

At the outset, when the CPU (1401) receives the input of the search criterion via the infrared receiver unit (1412) or the user I/F (1413) in accordance with the program for receiving search criterion developed on the work area of the main memory (01402), the CPU stores the received search criterion in the data area of the main memory (1402). Subsequently, in accordance with the program for conditional search developed on the work area of the main memory (01402), the attribute information matching the search criterion is searched from the attribute information of the information units, acquired from the viewing source device and stored in the data area of the main memory (1402), and the searched attribute information is stored as the attribute information of selected information unit in the data area of the main memory (1402).

Subsequently, the number of selected information units is acquired by calculation, and stored in the data area of the main memory (1402) as the number of selected information units. Subsequently, display information regarding size of the display is extracted from the secondary memory (1404), and stored in the data area of the main memory (1402). Subsequently, by using the calculated and stored number of selected information units and the display information, the allocation amount indicating size for displaying one object on the display screen is calculated, such that objects corresponding to all selected information units are displayed within one display screen.

Subsequently, one style pattern according to the calculated allocation amount is extracted from the style patterns for displaying object stored in the secondary memory (1404), and stored in the data area of the main memory (1402). Subsequently, in accordance with the style pattern of the extracted object, the GUI data is developed on the VRAM (1405), and is outputted to the display (1411).

### <Processing Flow of Second Embodiment>

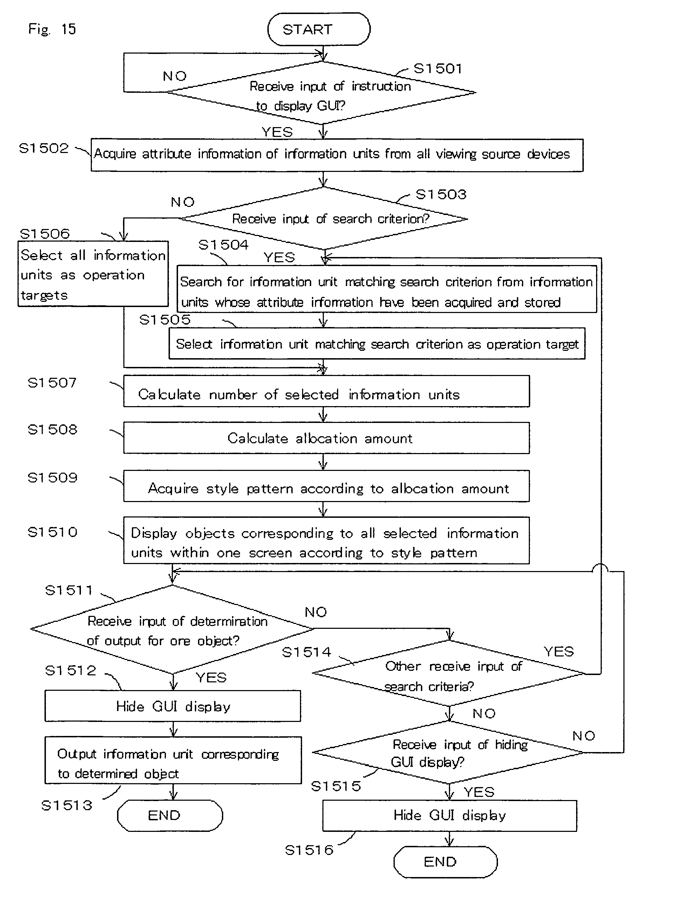

With reference to a flowchart of Fig. 15, processes of the AV apparatus of the second embodiment will be described.

At the outset, when receiving the input of instruction to display the GUI for determining the information unit to be outputted from the user (S1501), the attribute information of information unit, which can be outputted using the AV apparatus, is acquired from all viewing source devices being connected at the time (S1502). Subsequently, when receiving the search criterion for narrowing down the information unit to be displayed by the GUI as the operation target (S1503), the information unit matching the search criterion is searched from all the information units, whose attribute information have been acquired in the step S1502 (S1504). Subsequently, the information unit matching the search criterion is selected as the information unit as the GUI operation target (S1505). Meanwhile, if the input of the search criterion is not received in the step S1503, all the information units, whose attribute information have been acquired in the step S1502, are selected as the GUI operation targets (S1506).

Subsequently, the number of the selected information units is calculated (S1507), and the allocation amount is calculated by using the information of display size (S1508). Subsequently, the style pattern according to the calculated allocation amount is extracted from a plurality of style patterns for determining display manner for the object (S1509), and according to the extracted style pattern, the objects corresponding to all selected information units are displayed within one screen (S1510).

Subsequently, when receiving the input of the determination of output for one object from the GUI using the cursor etc. (S1511), the GUI of the display is hidden (S1512), and the information unit corresponding to the object, for which the determination of output has been inputted, is acquired from the viewing source device, and outputted to the display (S1513).

Meanwhile, if the input of the determination of output for the one object has not been received in step S1511, it is determined whether the input of the other search criterion has been received in step S1514. If the input of the other search criterion has been received in step S1514, the processing returns to step S1504, and the same processes are repeated. If the input of the other search criterion has not been received in step S1514, it is determined whether the input to hide the GUI has been received in step S1515. When receiving the input to hide the GUI in step S1515, the GUI of the display is hidden (S1516), and process is terminated. If the input to hide the GUI is not received in step S1515, the processing returns to step S1511, and it is determined whether the input of the determination of output for the one object is received. Subsequently, the same processes are repeated.

### <Brief Description of Effects of Second Embodiment>

According to the AV apparatus of the second embodiment, the user can narrow down the content, whose objects as the operation targets are displayed on the display, to appropriate amount by search criterion. As a result of this, the user can efficiently find the object corresponding to the desired content through the GUI.

### «Third Embodiment»

### <Concept of Third Embodiment>

In an AV apparatus of a third embodiment based on the first or second embodiment, as the means for selecting the content, whose object as the operation target is displayed on the display screen, it is further possible to select a predetermined number of objects through the GUI displaying the objects of the content as the operation targets by using the cursor etc, thereby selecting the content, whose objects as the operation target are displayed.

### <Functional Configuration of Third Embodiment>

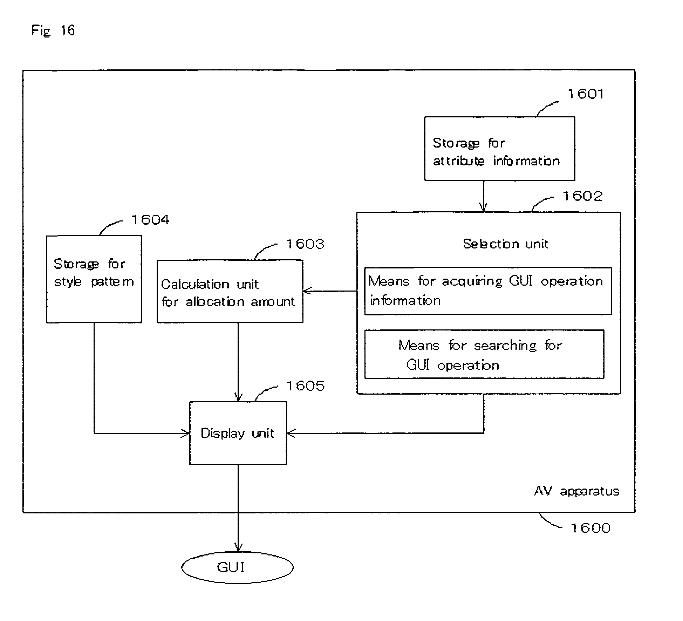

Fig. 16 is a functional block of the AV apparatus of the third embodiment. As shown in Fig. 16, an 'AV apparatus' (1600) of the third embodiment comprises a 'storage for attribute information' (1601), a 'selection unit' (1602), a 'calculation unit for allocation amount' (1603), a 'storage for style pattern' (1604), and a 'display unit' (1605). The 'selection unit' (01602) comprises 'means for acquiring GUI operation information' and 'means for searching for GUI operation'.

Note that, functional configurations of the 'storage for attribute information' (1601), the 'calculation unit for allocation amount' (1603), the 'storage for style pattern' (1604), and the 'display unit' (1605) are the same as those described in the first embodiment, so that descriptions have been omitted. Hereinafter, descriptions of functional configurations of the 'means for acquiring GUI operation information' and the 'means for searching for GUI operation' of the selection unit (1602) will be provided.

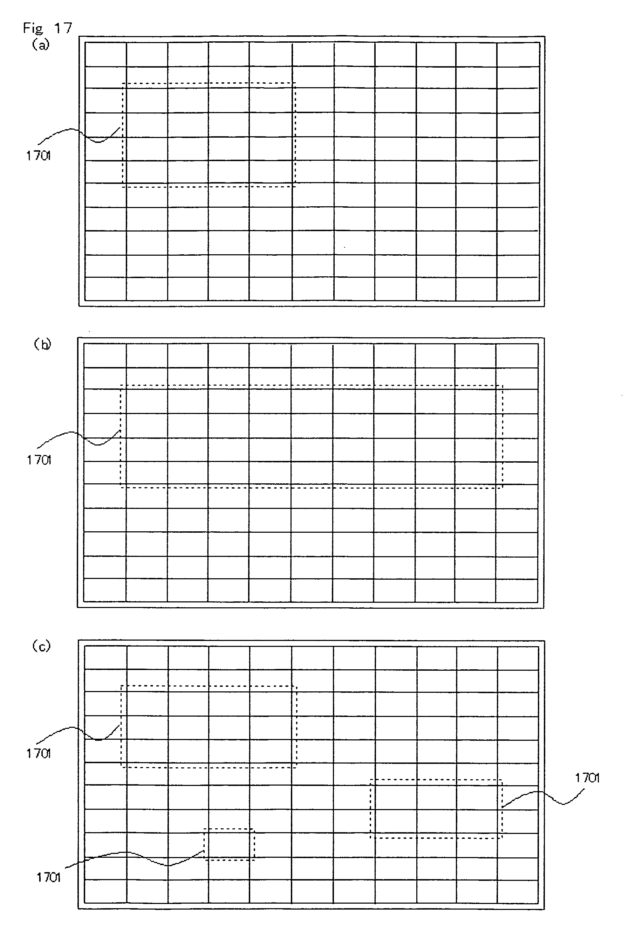

The 'means for acquiring GUI operation information' of the 'selection unit' (1602) is configured to acquire GUI operation information for the object for selection. This 'selection' is the same as that of the 'means for receiving search criterion' of the second embodiment, so that description is omitted. Examples of the GUI operation information acquired by the selection unit (1602) include the following information. For example, as shown in Fig. 17(a), when the user selects the predetermined number of the objects from the objects displayed in the list using the cursor (1701) by operating the remote control, the means for acquiring GUI operation information may acquire the information for identifying the object selected by the cursor (1701) as the GUI operation information. In this case, as shown in Fig. 17(c), the size and shape of the cursor (1701) may be varied. Moreover, as shown in Fig. 17(c), the plurality of cursors (1701) are displayed on one screen, and the objects may be selected by using the plurality of cursors (1701). Moreover, a predetermined size of the cursor may be maintained, such that the objects, displayable by the predetermined display style of the object (the color tile style pattern, the thumbnail style pattern, or the thumbnail character style pattern), are always selected. For example, when it is determined that 'when the number of the objects to be displayed is 10 to 150, the objects are displayed by the thumbnail style pattern', if the user operates so as to 'select the information units, such that the objects are displayed by the thumbnail style pattern', the size of the cursor for always selecting the 10 to 150 objects is maintained. Here, the shape and number of the cursors may be varied.

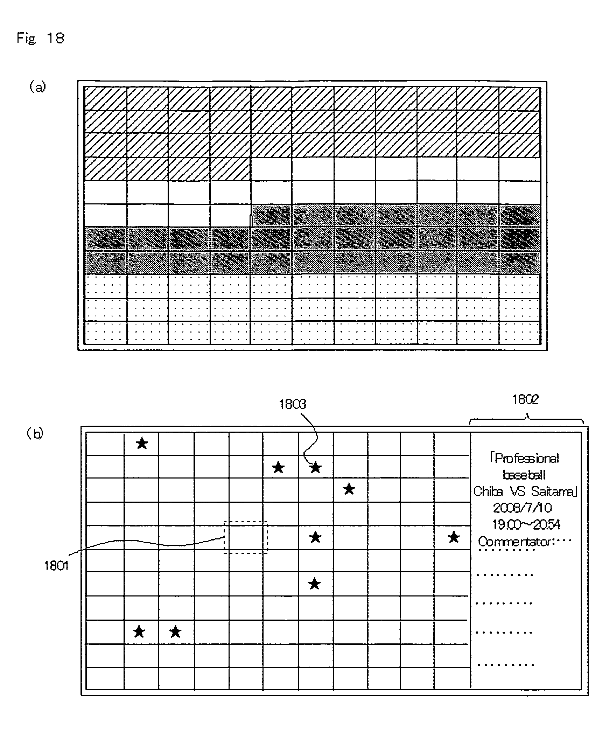

As to the other GUI operation information acquired by the selection unit (1602), as shown in Fig. 18(a), when the objects are displayed by the color tile style pattern, more than or equal to one of the displayed colors is selected, and the information to identify the objects displayed by the color may be acquired as the GUI operation information. Additionally, as shown in Fig. 18(b), one object is provisionally selected by the cursor (1801), and a determination as to selection is done with reference to the detailed information of the information unit corresponding to the provisionally selected object displayed in the information display field (1802), and when an indication (1803) such as star for the object, which has been determined to be selected, is displayed on the GUI, the information identifying the object, for which the star for the object, may be acquired as the GUI operation information.

The 'means for searching for GUI operation' of the 'selection unit' (1602) is configured to search for the information unit specified by the acquired GUI operation information from the information units whose attribute information have been stored in the storage for attribute information. Therefore, the means for searching for GUI operation identifies the object specified by the GUI operation information from the object displayed in the list, and searches for the information unit corresponding to the object. As to the concrete method for searching, for example, as described in the first embodiment, when the correspondence between the object and the information unit by serial numbers is established, the serial number of the identified object is identified, thereby searching for the information unit having the same serial number. Note that, the information unit searched by the means for searching for GUI operation is selected by the selection unit (1602), and the corresponding object is displayed in the list by the display unit (1605).

### <Hardware Configuration of Third Embodiment>

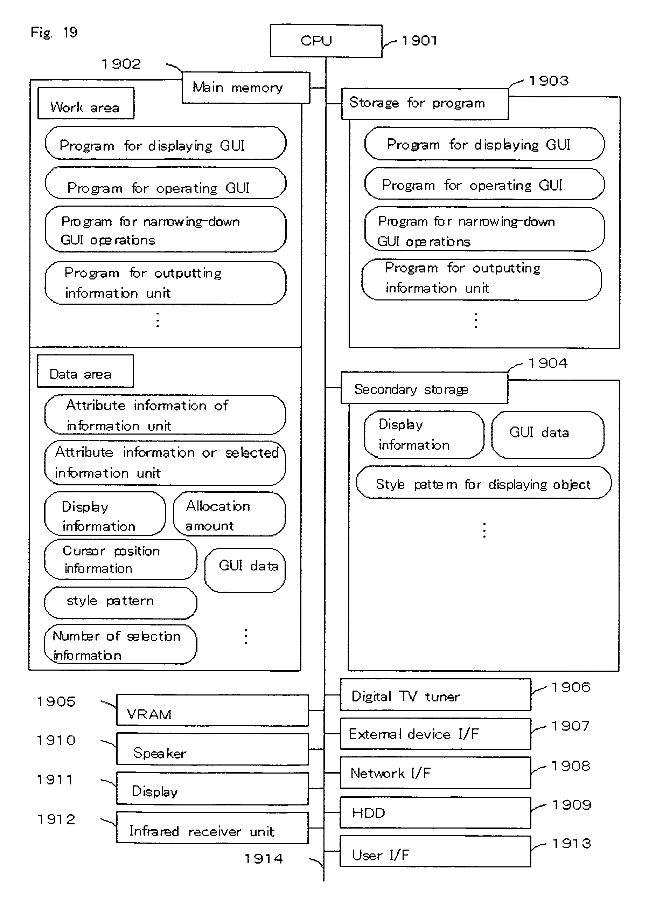

Fig. 19 is a conceptual diagram showing an example of hardware configuration of the AV apparatus of the third embodiment. Hereinafter, with reference to a diagram of Fig. 19 showing an example of a hardware configuration, functions of the AV apparatus of the third embodiment will be described.

At the outset, in a state that the GUI is displayed on the display (1911), when the CPU (1901) receives the 'input of an instruction to narrow down the number of the objects to be displayed through the GUI' via the infrared receiver unit (1912) or the user I/F (1913) in accordance with the program for displaying GUI developed on the work area of the main memory (1902), the cursor position at the time of input is calculated in accordance with the program for narrowing down GUI operations. Subsequently, when specifying the number of object corresponding to the cursor position, thereby identifying the information unit corresponding to the specified object. Subsequently, the attribute information of the identified information unit is stored as the attribute information of selected information unit in the data area of the main memory (1902).

Subsequently, the number of selected information units is acquired by calculation, and stored in the data area of the main memory (1902) as the number of selected information units. Subsequently, display information regarding size of the display is extracted from the secondary memory (1904), and stored in the data area of the main memory (1902). Subsequently, by using the calculated and stored number of selected information units and the display information, the allocation amount indicating size for displaying one object on the display screen is calculated, such that objects corresponding to all selected information units are displayed within one display screen.

Subsequently, one style pattern according to the calculated allocation amount is extracted from the style patterns for displaying object stored in the secondary memory (1904), and stored in the data area of the main memory (1902). Subsequently, in accordance with the style pattern of the extracted object, the GUI data is developed on the VRAM (1905), and is outputted to the display (1911).

### <Processing Flow of Third Embodiment>

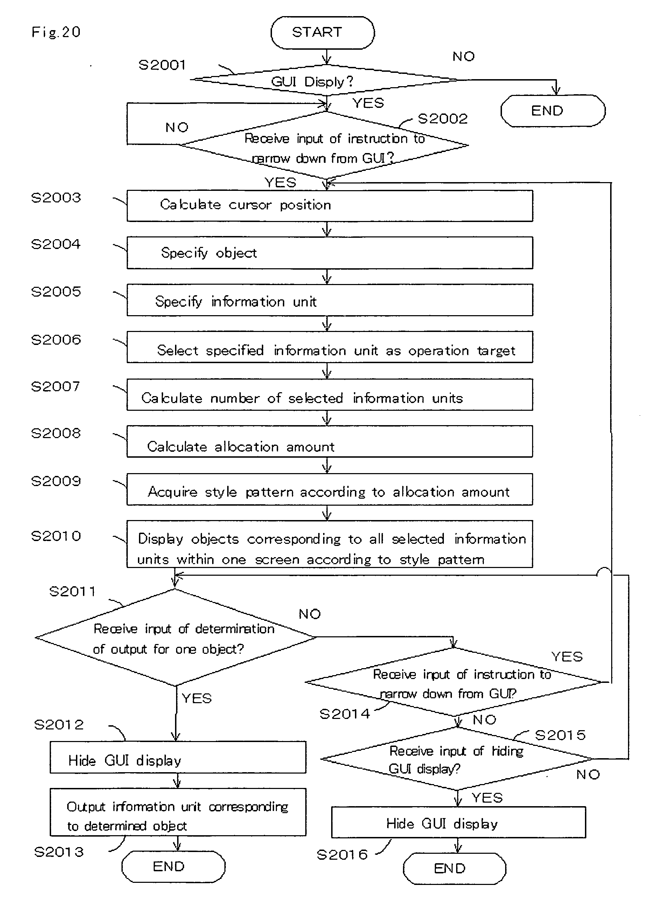

With reference to a flowchart of Fig. 20, processes of the AV apparatus of the third embodiment will be described.

At the outset, in a state that the GUI for determining the information unit to be outputted is displayed (S2001), when receiving the input of instruction to narrow down the information units, whose objects are displayed, by using the cursor through the GUI (S2002), the cursor position at the time of receiving the input is calculated (S2003). Subsequently, when specifying the object displayed at the calculated cursor position (S2004), the information unit corresponding to the specified object is specified (S2005), and the specified information unit is selected as the GUI operation targets (S2006).

Subsequently, the number of the selected information units is calculated (S2007), and the allocation amount is calculated by using the information of display size (S2008). Subsequently, the style pattern according to the calculated allocation amount is extracted from a plurality of style patterns for determining display manner for the object (S2009), and according to the extracted style pattern, the objects corresponding to all selected information units are displayed within one screen (S2010).

Subsequently, when receiving the input of the determination of output for one object from the GUI using the cursor etc. (S2011), the GUI of the display is hidden (S2012), and the information unit corresponding to the object, for which the determination of output has been inputted, is acquired from the viewing source device, and outputted to the display (S2013).

Meanwhile, if the input of the determination of output for the one object has not been received in step S2011, it is determined again whether the input of the instruction signal to narrow down the information units, whose object are displayed by using the cursor through the GUI, has been received. If the input of the other instruction signal to narrow down the information units has been received in step S2014, the processing returns to step S2003, and the same processes are repeated. If the input of the other instruction signal to narrow down has not been received in step S2014, it is determined whether the input to hide the GUI has been received in step S2015. When receiving the input to hide the GUI in step S2015, the GUI of the display is hidden (S2016), and process is terminated. If the input to hide the GUI is not received in step S2015, the processing returns to step S2011, and it is determined whether the input of the determination of output for the one object is received. Subsequently, the same processes are repeated.

### BRIEF DESCRIPTION OF THE DRAWINGS

Fig. 1 is a conceptual diagram showing functions of a first embodiment.
Fig. 2 is a functional block diagram of the first embodiment.
Fig. 3 is a conceptual diagram 1 showing a concept of viewing source device.
Fig. 4 is a conceptual diagram 2 showing a concept of viewing source device.
Fig. 5 is a diagram showing a frame format of attribute information.
Fig. 6 is a diagram 1 showing an example of GUI of the first embodiment.
Fig. 7 is a diagram 2 showing an example of GUI of the first embodiment.
Fig. 8 is a diagram showing a manner of division of a display screen.
Fig. 9 is a conceptual diagram showing an example of hardware configuration of an AV apparatus of the first embodiment.
Fig. 10 is a flowchart showing processes in the first embodiment.
Fig. 11 is a functional block diagram of a second embodiment.
Fig. 12 is a diagram 1 showing an example of GUI of the second embodiment.
Fig. 13 is a diagram 2 showing an example of GUI of the second embodiment.
Fig. 14 is a conceptual diagram showing an example of hardware configuration of an AV apparatus of the second embodiment.
Fig. 15 is a flowchart showing processes in the second embodiment.
Fig. 16 is a functional block diagram of a third embodiment.
Fig. 17 is a diagram 1 showing an example of GUI of the third embodiment.
Fig. 18 is a diagram 2 showing an example of GUI of the third embodiment.
Fig. 19 is a conceptual diagram showing an example of hardware configuration of an AV apparatus of the third embodiment.
Fig. 20 is a flowchart showing processes in the third embodiment.
Fig. 21 is a diagram showing an example of data indicating a style pattern according to allocation amount.

### Description of Reference Numerals

- 0200: AV apparatus
- 0201: Storage for attribute information
- 0202: Selection unit
- 0203: Calculation unit for allocation amount
- 0204: Storage for style pattern
- 0205: Display unit

## Claims

1. An AV apparatus, comprising:
a storage for attribute information, storing a plurality of attribute information of information units such as a file or a folder as a target for operation by a user;
a selection unit, selecting the information unit as a target for GUI operation from the information units stored by the storage for attribute information;
a calculation unit for allocation amount, calculating allocation amount indicating a size of a display area to be allocated to the respective objects in order to display the objects corresponding to all information units selected by the selection unit within one screen;
a storage for style pattern, storing the attribute information of the information unit to be displayed for the object and a style pattern for determining a style of the object; and
a display unit, displaying the objects, corresponding to the all information units selected by the selection unit, within one screen in accordance with the style pattern, stored in the storage for style pattern, based on the allocation amount calculated by the calculation unit for allocation amount.

2. The AV apparatus according to Claim 1,
wherein the storage for style pattern comprises
means for storing color tile style pattern, storing a color tile style pattern for identifying the attribute information of a predetermined type of the information unit by an appearance such as a color of the color tile corresponding to a predetermined allocation amount.

3. The AV apparatus according to Claim 1 or 2,
wherein the storage for style pattern comprises
means for storing thumbnail style pattern, storing a thumbnail style pattern, for identifying the attribute information of a predetermined type of the information unit by thumbnail graphic, corresponding to a predetermined allocation amount.

4. The AV apparatus according to any one of Claims 1 to 3,
wherein the storage for style pattern comprises
means for storing thumbnail character style pattern, storing a thumbnail character style pattern, for identifying the attribute information of a predetermined type of the information unit by thumbnail graphic and characters, corresponding to a predetermined allocation amount.

5. The AV apparatus according to any one of Claims 1 to 4,
wherein the selection unit comprises
means for receiving search criterion, receiving input of search criterion for selection, and means for conditional search, searching for the information unit corresponding to the search criterion received by the means for receiving search criterion from the information units whose attribute information have been stored in the storage for attribute information.

6. The AV apparatus according to any one of Claims 1 to 5,
wherein the selection unit comprises
means for acquiring GUI operation information, acquiring GUI operation information for the object for selection, and
means for searching for GUI operation, searching for information unit specified by the acquired GUI operation information from the information units whose attribute information have been stored in the storage for attribute information.

7. A method for operating an AV apparatus, comprising the steps of:
acquiring and storing a plurality of attribute information of information units such as a file or a folder as a target for operation by a user;
selecting the information unit as a target for GUI operation from the information units, stored by the step of storing, for attribute information;
calculating allocation amount indicating a size of a display area to be allocated to the respective objects in order to display the objects corresponding to all information units, selected by the step of selecting, within one screen; and
displaying the objects, corresponding to the all information units selected by the step of selecting, within one screen in accordance with the type of attribute information correlated with the information unit to be displayed for the object and the style pattern for determining a style of the object according to the allocation amount calculated by the step of calculating allocation amount.

8. The method for operating AV apparatus according to Claim 7,
wherein the step of selecting comprises the sub-steps of
receiving input of search criterion for selection, and
searching for the information unit corresponding to the search criterion, received by the sub-step of receiving, from the information units whose attribute information have been stored in the storage for attribute information.

9. The method for operating AV apparatus according to Claim 7 or 8,
wherein the step of selecting comprises the sub-steps of
acquiring GUI operation information for the object for selection, and
searching for information unit specified by the acquired GUI operation information from the information units whose attribute information have been acquired and stored by the step of acquiring and storing the attribute information.
